(19)

**Europäisches Patentamt**
**European Patent Office**
**Office européen des brevets**

(11) **EP 1 929 673 B1**

(12) **EUROPÄISCHE PATENTSCHRIFT**

(45) Veröffentlichungstag und Bekanntmachung des Hinweises auf die Patenterteilung:
**19.10.2011 Patentblatt 2011/42**

(51) Int Cl.:
*H04B 13/00* (2006.01)     *H04B 5/00* (2006.01)
*G06K 7/08* (2006.01)

(21) Anmeldenummer: **06775209.7**

(22) Anmeldetag: **26.09.2006**

(86) Internationale Anmeldenummer:
**PCT/CH2006/000518**

(87) Internationale Veröffentlichungsnummer:
**WO 2007/036061 (05.04.2007 Gazette 2007/14)**

(54) **VERFAHREN UND SYSTEM FUR DIE ÜBERTRAGUNG VON IDENTIFIKATIONSSIGNALEN**

METHOD AND SYSTEM FOR THE TRANSMISSION OF IDENTIFICATION SIGNALS

PROCEDE ET SYSTEME DE TRANSMISSION DE SIGNAUX D'IDENTIFICATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.09.2005 CH 15682005**

(43) Veröffentlichungstag der Anmeldung:
**11.06.2008 Patentblatt 2008/24**

(73) Patentinhaber: **Kaba AG**
**8620 Wetzikon (CH)**

(72) Erfinder:
• **HÄBERLI, Andreas, Martin**
**CH-8608 Bubikon (CH)**

• **STUCKI, Andreas**
**CH-8624 Grüt (CH)**
• **CAVELTI, Alois**
**CH-8616 Riedikon (CH)**

(74) Vertreter: **Frei Patent Attorneys**
**Frei Patentanwaltsbüro AG**
**Postfach 1771**
**8032 Zürich (CH)**

(56) Entgegenhaltungen:
EP-A- 1 024 626      WO-A-00/15931
WO-A-00/16283      WO-A-2004/062131
US-A- 4 591 854      US-A- 5 682 032
US-A- 6 104 913      US-A1- 2002 019 807

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft die Kommunikation zum Zweck der Zuizangskontrolle und/oder Verriegelung, zwischen mindestens einer Schreib- und/oder Lesestation und mindestens einem portablen Gerät, welches ein Benutzer auf sich trägt und welches als Informationsträger dient.

Solche Informationsträger sind gemäss dem Stand der Technik als Transponder ausgestaltet und werden zunehmend als Identifikationsmedien für die Zugangskontrolle bei mechatronischen Schliesssystemen, für das Ticketing, für die Personenidentifikation und für weitere Anwendungen verwendet. Sie ersetzen oder ergänzen dabei mechanisch kodierte Schlüssel, Papier-Wertkarten, Papier-Tickets, von Auge lesbare Ausweispapiere etc. Auch integrierte Lösungen mit mehreren Applikationen auf einer einzigen Karte oder die Integration des Identifikationsmediums in einen anderen Gegenstand - bspw. eine Uhr oder einen mechanisch kodierten Schlüssel - sind schon vorgeschlagen worden. Den Transponder trägt im Allgemeinen der Benutzer auf sich. Insbesondere bei Anwendungen wie dem Ticketing, aber auch bei der Zugangskontrolle muss der Transponder nicht an eine bestimmte Person gebunden sein. Vielmehr kann er durchaus auch übertragbar und bspw. als elektronische Wertkarte ausgebildet sein. Oft, aber nicht immer, besitzt der Transponder eine ihn charakterisierende Unikatsnummer.

Ein besonderes Interesse gilt den berührungslosen Systemen, wo eine drahtlose Informationsübertragung zwischen dem Transponder und einem Schreib- und Lesemodul stattfindet. Im Allgemeinen ist bei solchen Systemen die Informationsübertragung wechselseitig. Unter Umständen werden im Transponder als Resultat der Informationsübertragung Daten gespeichert.

Nachteilig an berührungslosen Systemen ist, dass sie nicht garantieren können, dass die Datenübertragung personenselektiv stattfindet. Es kann nicht ausgeschlossen werden, dass das Schreib- und Lesemodul Signale empfängt, die nicht von der vorgesehenen Person (bspw. der sich Zugang verschaffenden Person) sondern von einer anderen sich in der Nähe aufhaltenden Person stammen. Unberechtigte Zutritte, Kollisionen oder Mehrfachbuchungen können je nach Anwendung die Folge sein. Das schafft ein Dilemma: Aus Komfortgründen wäre es einerseits wünschenswert, wenn die Informationsübertragung möglichst langreichweitig wäre: Der Benutzer soll den Transponder nicht aktiv an das Schreib- und Lesemodul halten müssen. Andererseits kann nur durch eine kurzreichweitige, möglichst örtlich beschränkte Informationsübertragung einigermassen sichergestellt werden, dass die Informationsübertragung nur zwischen der sich Zugang verschaffenden Person und dem Schreib- und Lesemodul stattfindet.

Ein ebenfalls bekanntes drahtloses System für die Informationsübertragung beruht auf einer kapazitiven Kopplung zwischen einem portablen Gerät und einem Schreib- und Lesemodul über den menschlichen Körper. Solche Systeme werden bspw. in der US-Patentschrift 4,591,854, der US-Patentschrift 5,914,701 und der US-Patentschrift 5,796,827 offenbart. Ein Benutzer trägt das portable Gerät auf sich. Sobald der Benutzer eine mit dem Schreib- und Lesemodul gekoppelte Berührungsfläche berührt, fliesst Information. Zum Beispiel kann ein eindeutiger Zugangscode vom tragbaren Gerät an das Schreib- und Lesemodul übertragen werden. Nachteilig an diesem System ist, dass aufgrund des schlechten Signal-Rauschverhältnisses nur eine beschränkte Datenmenge übertragen werden kann. Ein gutes Signal-Rauschverhältnis ist nur bei einer gossen Amplitude des Übertragungssignals möglich. Eine grosse Amplitude (d.h. hohe Spannung) wird aber vom Benutzer eher nicht toleriert.

Die Schrift EP 1024 626 zeigt ein Verfahren zum Einrichten sicherer Datenaustauschsessionen zwischen einem Benutzergerät und einem weiteren Gerät unter Verwendung einer unidirektionalen Verbindung.

Ausgehend von diesem Stand der Technik ist eine Aufgabe der Erfindung, ein verbessertes Verfahren für die Zugangskontrolle und/oder Verriegelung zur Verfügung zu stellen.

Diese Aufgabe wird gemäss der Erfindung im Wesentlichen dadurch gelöst, dass die Informationsübertragung mittels dem portablen Gerät und einer Schreib- und/oder Lesestation über zwei Kommunikationskanäle erfolgt. Einerseits findet eine erste Informationsübertragung kapaztiv statt, wobei eine Kopplung über den menschlichen Körper stattfinden kann. Andererseits beinhaltet der Informationsübertragungsvorgang auch eine Informationsübertragung über einen zweiten, bspw. konventionellen und 'berührungslosen' Informationskanal. Ein 'berührungsloser' Informationskanal steht hier für eine induktiven Übertragung oder eine Übertragung via elektromagnetischer Wellen, bspw. im Radiofrequenz-Mikrowellen- oder Infrarotbereich. Dies impliziert nicht, dass für die Übertragung von Information über den ersten Kommunikationskanal notwendigerweise eine Berührung stattfinden muss.

Über den ersten Kommunikationskanal übermittelte Informationen dienen primär zur Identifikation und Selektion des Benutzers. Sie beinhalten bspw. einen eindeutigen ("unique") Identifikationscode. Über den zweiten Kommunikationskanal übermittelte Informationen sind bspw. die eigentlichen übertragenen Informationen, die auch (u.U. nebst Benutzerdaten) auf dem portablen Gerät und/oder der Schreib- und/oder Lesestation abgespeichert werden.

Im Folgenden wird über den ersten Kommunikationskanal übermittelte Information "erste Information" (bzw. "erste Daten") genannt, die über den zweiten Informationskanal übermittelte Information "zweite Information" (bzw. "zweite Daten"). Dies unabhängig von der Reihenfolge der Informationsübertragungsvorgänge sowie davon, ob die Übertragung der ersten und/oder zweiten Informationen nur die einseitige Übermittlung oder den wechselseitigen Informationsaustausch beinhaltet und ob nur ein einziges Informationspaket übermittelt wird oder ob eine Mehrzahl von Informationspaketen u.U. gestaffelt übermittelt wird.

Der ganze Schreib- und/oder Leseprozess - der Austausch der ersten und der zweiten Information - findet bevorzugt in einer kurzen Zeitspanne, bspw. während maximal 5 s, besonders bevorzugt während maximal 2 s statt. Nur schon dadurch kann je nach Anordnung der Schreib- und/oder Lesestation gewährleistet sein, dass, die erste und zweite Information mit demselben portablen Gerät ausgetauscht wird. Alternativ oder ergänzend zu dieser 'raschen' Informationsübertragung sind weitere Massnahmen für die Gewährleistung der Personenselektivität möglich, was in diesem Text noch genauer erörtert wird.

Ein unselektiver bzw. Benutzer-unspezifischer Informationsaustausch zur Vorbereitung der zweiten Informationsübertragung, denkbar vor allem zur Synchronisierung und zum Aufbau des zweiten Kommunikationskanals, kann vor der ersten Informationsübertragung erfolgen. Bevorzugt - aber nicht notwendigerweise - beginnt die eigentliche zweite Informationsübertragung nach der ersten Informationsübertragung. Das ermöglicht die besonders vorteilhafte Ausführungsform, bei welcher die erste Informationsübertragung Voraussetzung für die zweite Informationsübertragung ist. Beispielsweise wird mit der ersten Information durch die Schreib- und/oder Lesestation verifiziert, ob das portable Gerät zum Informationsaustausch überhaupt berechtigt ist. Alternativ oder ergänzend dazu kann natürlich auch umgekehrt durch das portable Gerät verifiziert werden, ob die Schreib- und/oder Lesestation zum Informationsaustausch berechtigt ist (bspw. zum Abbuchen eines Guthabens etc.). Die eigentlichen Schreib- und Leseprozesse finden dann mittels der - oft wechselseitigen - zweiten Informationsübertragung statt.

Gemäss einer besonders bevorzugten Ausführungsform wird die Personenselektivität beim Austausch der zweiten Information noch durch zusätzliche Massnahmen sichergestellt. Dies geschieht, indem die zweiten Daten mindestens teilweise abhängig von den ersten Daten sind. Dann kann der Empfänger der jeweils übertragenen zweiten Daten verifizieren, ob diese von demjenigen Teilnehmer stammen, der schon an der ersten Informationsübertragung beteiligt war. Beispielsweise können zweite Daten eine Funktion der ersten Daten sein. So können die ersten Daten in jedem Datenpaket der zweiten Daten oder in mindestens einem Informationspaket der zweiten Daten ganz oder teilweise enthalten sein. Die ersten Daten können auch der Schreib- und Lesestation die Identifikation des portablen Geräts erlauben. Die zweiten Daten werden dann vom Schreib- und/oder Lesestation an das portable Gerät gesandt und enthalten eine Adresse des portablen Geräts. Alternativ oder ergänzend dazu können die ersten Daten einen Schlüssel beinhalten, welcher für die mindestens teilweise Verschlüsselung der zweiten Daten verwendet werden kann. Als weitere Alternative können die ersten Daten auch nur einen Verweis auf einen beidseitig vorhandenen Schlüssel beinhalten. Viele weitere Varianten sind denkbar.

Es kann also für die zweiten Daten $D_2$, welche eine zweite Information $I_2$ (bzw. Pakete davon) enthalten, Folgendes gelten:

$$D_2 = f_{D_1}(I_2)$$

wobei $f_{D_1}$ eine von den ersten Daten $D_1$ abhängige Funktion darstellt. Im einfachsten Fall kann das so aussehen:

$$D_2 = (D_1, I_2)$$

d.h. die zweiten Daten bestehen lediglich aus einer Aneinanderreihung der ersten Daten mit der zu übertragenden zweiten Information. Der Empfänger - also die Schreib- und/oder Lesestation bzw. das portable Gerät- akzeptiert die zweiten Daten nur bei Stimmigkeit der ersten Daten. Andernfalls stammen die empfangenen Daten nicht vom 'richtigen' Teilnehmer.

Eine höhere Sicherheit wird gewährleistet, wenn die Daten $D_1$ einen Schlüssel $K$ enthalten und wenn gilt:

$$D_2 = \{I_2\}_K \text{ oder } D_2 = (Id, \{I_2\}_K) \text{ oder } D_2 = \{(Id, I_2)\}_K \text{ oder } D_2 = (Id, \{(Id, I_2)\}_K),$$

wobei *Id* eine Identifikation des Senders darstellt und $\{X\}_K$ die mit dem Schlüssel *K* verschlüsselte Information *X* bezeichnet. Beim wechselseitigen Informationsaustausch kann für beide Richtungen der Datenübertragung derselbe Schlüssel verwendet werden, oder es können verschiedene unter Umständen wechselnde Schlüssel verwendet werden. Der verwendete Schlüssel ist bspw. spezifisch für das portable Gerät und kann auf der Seite der Schreib- und/oder Lesestation mit dem "key diversification"-Vorgehen verwaltet werden. Natürlich sind auch andere Verschlüsselungs- und Authentifizierungs-Vorgehensweisen denkbar, bspw. auch basierend auf dem public key/private key-Prinzip etc.

Die Erfindung betrifft auch ein System zur Durchführung des erfindungsgemässen Verfahrens sowie eine Schreib- und/oder Lesestation und ein portables Gerät.

Das erfindungsgemässe Verfahren bright nebst der vorstehend diskutierten zusätzlichen Sicherheit auch erhebliche Vorteile beim Handling durch den Benutzer. Die scheinbare Verkomplizierung auf der technischen Seite- es werden zwei Informationsaustausch-Kanäle anstatt nur einer benötigt - führt zu einer Vereinfachung für den Benutzer.

So kann bspw. der Benutzer sich Zugang zu einem Objekt verschaffen, indem er die Türfalle betätigt. Er muss weder eine Karte oder einen Schlüssel hervorholen noch eine Code eingeben oder andere Manipulationen vornehmen (aber selbstverständlich ist die Möglichkeit einer PIN-Eingabe oder anderen Manipulation für eine zusätzliche Sicherheit in Kombination mit dem erfindungsgemässen Verfahren nicht ausgeschlossen.). Im Gegensatz zum Stand der Technik (bspw. "hands free access" zum Auto) gilt das auch bei einer hochsicheren Zugangskontrolle.

Ein weiteres Beispiel ist die Personenidentifikation mittels biometrischer Daten. Gemäss dem Stand der Technik muss ein Benutzer (im Falle Von Fingerabdrücken als biometrisches Merkmal) in einem ersten Schritt seinen Finger in Kontakt mit einem Sensor bringen, welcher ein sogenanntes Templat des Fingerabdrucks erstellt.

Anschliessend muss er einen persönlichen Datenträger (Smart Card o.ä.) in Kontakt mit einem Leser bringen; dort findet ein Abgleich der gemessenen mit gespeicherten biometrischen Daten statt, Erst dann wird - bei Berechtigung des Benutzers - das gewünschte Objekt freigeschaltet. Das erfindungsgemässe Verfahren erlaubt, das Ermitteln des Templats und einen sicheren Datenaustausch gleichzeitig durchzuführen. Der Benutzer muss also nur einen Schritt durchführen, nämlich den Finger auf eine Kontaktfläche legen. Bei der Verwendung von anderen biometrisch vermessbaren Körperteilen (Retina etc.) ist das Vorgehen analog; einzige Bedingung ist, dass der Benutzer seinen Körper in Berührungskontakt mit einer Kuppelfläche bringt oder ein Körperteil bzw. das portable Gerät in die Nähe desselben bringt. Der Maximalabstand, bei welchem eine kapazitive Kopplung noch genügend ausgeprägt ist, hängt von der Amplitude der Spannung ab. Er kann bis zu 50 cm betragen; bei vorzugsweise eingesetzten Amplituden beträgt er einige cm, bspw. maximal 10 cm, je nach Umsänden (relative Orientierung der Objekte, Leitfähigkeit von Böden und Schuhwerk etc.) auch mehr.

Speziell geeignet ist das erfindungsgemässe Verfahren auch für Systeme mit Sicherheitshierarchien: Für die tiefste Sicherheitsstufe - beispielsweise für das Öffnen von Türen innerhalb eines Gebäudes in einem Betrieb - reicht unter Umständen die Übertragung von wenigen Bytes. Dafür reicht die erste Informationsübertragung. Für höhere Sicherheitsstufen und die Protokollierung hingegen wird mit der erfindungsgemässen Kombination der ersten mit der zweiten Informationsübertragung gearbeitet.

Obwohl in den vorstehenden Beispielen davon ausgegangen wird, dass eine Kupplungsgsfläche durch den Benutzer von Hand berührt wird bzw. der Benutzer seine Hand in die Nähe dieser Fläche hält, ist das keinesfalls notwendig. Gerade für "Hands Free"-Anwendungen ist das erfindungsgemässe Verfahren besonders gut geeignet. Bspw. kann der Benutzer ohne Weiteres eine Türe mit der Schulter öffnen; die Türe weist dann die Kupplungsfläche auf, und die Kopplung erfolgt via die Schulter. Es ist auch denkbar, dass der Benutzer das portable Gerät selbst in die Nähe der Kupplungsfläche hält.

Im Folgenden werden Ausführungsformen der Erfindung anhand von Zeichnungen detaillierter beschrieben. In den Zeichnungen zeigen:

- Figuren 1 und 2 sehr schematisch mögliche Implementierungen eines erfindungsgemässen portablen Geräts zur Durchführung des erfindungsgemässen Verfahrens,

- Figuren 3 bis 7 Ablaufdiagramme von Ausführungsbeispielen des erfindungsgemässen Verfahrens,

- Figuren 8 bis 11 Skizzen zur Veranschaulichung möglicher Anwendungen,

- Figur 12 eine weitere mögliche Implementierung eines erfindungsgemässen portablen Geräts.

Für das erfindungsgemässe Verfahren wird im Allgemeinen zwischen einer hier "Schreib- und/oder Lesestation" genannten Einheit und einer hier "portables Gerät" genannten Einheit durchgeführt. Diese Einheit kann aus einer oder aus mehreren, durch eine Kommunikationsverbindung gekoppelten, am beieinander oder an unterschiedlichen Orten angeordneten Komponenten bestehen. Die Schreib- und/oder Lesestation kann ortsfest, an ein Objekt (bspw. Transportmittel) gekoppelt oder frei transportabel sein. Sie weist ein Mittel zur Kommunikation über eine kapazitive Kopplung bspw. via den menschlichen Körper auf. In vielen Ausführungsformen ist dieses Mittel ein "kapazitiver" Empfänger. Der Schreib- und/oder Lesestation ist für die kapazitive Kommunikation - meist mit dem menschlichen Körper als Übertragungsmedium - eine Kupplungsfläche zugeordnet, welche vorzugsweise aber nicht notwendigerweise metallisch ist (eine metallische Fläche kann auch durch Kunststoff oder Glas geschützt sein).

Daneben weist die Schreib- und/oder Lesestation gemäss einer ersten Ausführungsform der Erfindung auch ein Modul zur Kommunikation über elektromagnetische Induktion oder über elektromagnetische Wellen auf. Dieses Modul wird im Folgenden "Transceiver" genannt. Der Transceiver kann auf an sich bekannte Art als RFID-, UHF, IR- etc. Transceiver ausgebildet sein.

Das Mittel zur Kommunikation via den menschlichen Körper und der. Transceiver sind kommunikationsmässig aneinander gekoppelt. Sie können, müssen aber nicht in einem gemeinsamen Gehäuse angeordnet sein. Der Begriff Schreib- und/oder Lesestation (oder Schreib- und/oder Leseeinrichtung) impliziert folglich auch nicht, dass das Mittel zur Kommunikation via den menschlichen Körper und der Transceiver sich physisch an demselben Ort befinden.

Gemäss einer zweiten Ausführungsform der Erfindung kann ein den Transceiver aufweisendes Modul zur Kommunikation über elektromagnetische Wellen auch in einem vom Mittel zur Kommunikation via den menschlichen Körper gänzlich separaten, d.h. nicht on-line kommunikationsmässig angekoppelten Gerät vorhanden sein. Dann findet ein Datenaustausch zwischen dem Transceiver und der Schreib- und oder Lesestation off-line, d.h. zu einem anderen Zeitpunkt als dem Zeitpunkt der Datenübertragung mit dem portablen Gerät statt. Dies wird anhand eines nachstehend beschriebenen Ausführungsbeispiels der Erfindung noch näher erläutert.

Das portable Gerät - oder "Tag" - wird durch den Benutzer nahe am Körper getragen. Es ist vorzugweise dünn und kartenartig ausgeführt. Es weist ein Mittel zur primär kapaziven Kommunikation bspw. via den menschlichen Körper sowie ein aktives (d.h. mit eigener Energieversorgung (Batterie)) oder passives Mittel (Transponder) zur Kommunikation über elektromagnetische Induktion oder über elektromagnetische Wellen mit dem Transceiver auf. Im Falle eines passiven Transponders kann das mittel zur kapazitiven Kommunikation ebenfalls induktiv gespeist sein. In beiden Fällen (aktiv-passiv) kann die Energieversorgung des Mittels zur kapazitiven Kommunikation und des Mittels zur berührungslosen Kommunikation eine gemeinsame sein (gemeinsame Batterie, Antenne etc.).

Systeme mit RFID-, UHF, IR- etc. Transceivern und entsprechenden passiven oder aktiven Transpondern sind hinlänglich bekannt und in unzähligen Ausführungsformen, Preisklassen und Sicherheitsstufen am Markt erhältlich. Als ein solches Beispiel seien die verschiedenen Ausführungen des Systems Legic® genannt. Auf die Details dieser Mittel zur 'berührungslosen' Kommunikation wird im Folgenden nicht näher eingegangen.

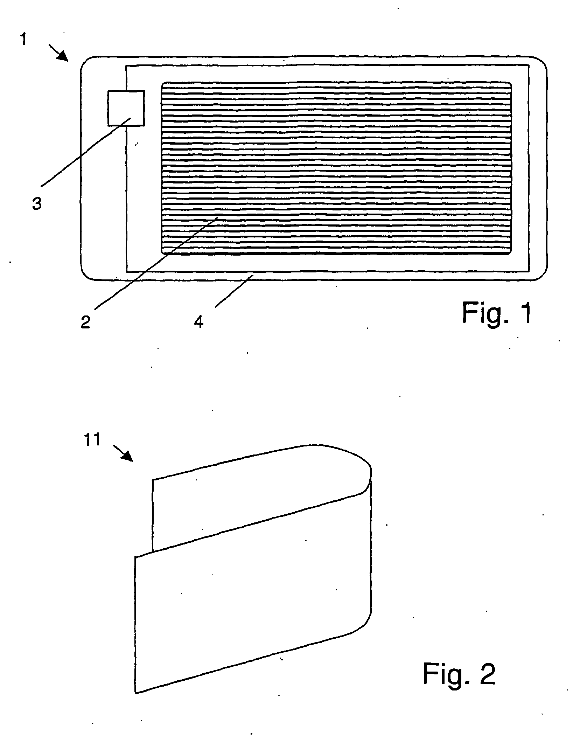

Die Mittel für kapazitive und berührungslose Kommunikation des portablen Geräts sind vorzugsweise in einem einzigen Element integriert, welches als Karte oder vergleichsweises Objekt ausgebildet sein kann, wie das in **Figur 1** illustriert ist. Figur 1 zeigt sehr schematisch ein portables Gerät 1 mit einer flächig ausgebildeten Elektrode 2 für die kapazitive Informationsübertragung. Der Elektrode 2 ist eine zweite Elektrode (nicht sichtbar) zugeordnet, welche parallel zur ersten Elektrode verläuft. Für die Informationsübertragung wird durch Steuermittel zwischen den beiden Elektroden eine Wechselspannung angelegt. Das portable Gerät weist auch einen passiven RFID-Chip 3 und eine daran gekoppelte Antenne 4 für die berührungslose Kommunikation auf. Zwischen dem RFID-Chip und den Steuermitteln kann eine kommunikative Kopplung vorhanden sein; dies ist aber nicht notwendig. Unter Umständen reicht es aus, wenn in der Schreib- und/oder Lesestation anhand eines von den Steuermitteln übersandten Identifikationscodes der RFID-Chip erkannt und bei der folgenden zweiten Informationsübertragung adressiert oder eindeutig identifiziert wird, wie das im Folgenden anhand von Beispielen noch näher erläutert wird.

Gemäss einer speziellen Ausführungsform ist das portable Gerät 11 flächig-dünn und biegbar, bspw. in der Art einer Banknote ausgestaltet, was in **Figur 2** sehr schematisch gezeichnet ist. Eine solche Ausführungsform ermöglicht vergleichsweise hohe Kapazitäten, wenn bspw. die beiden Elektroden rechts und links auf dem portablen Gerät 11 angeordnet sind. Ausserdem passt es ideal in einen Geldbeutel des Benutzers.

Auch andere Ausgestaltungen des portablen Geräts sind denkbar. Der 'Tag' kann bspw. als Modul ausgebildet sein, welcher in ein übergeordnetes portables Gerät (Armbanduhr, Palmtop, Mobiltelefon etc.) eingebaut werden kann und mit diesem übergeordneten portablen Gerät - bspw. in der beschriebenen Art - kommuniziert und bevorzugt von diesem gespeist wird. Die einteilige Ausführung des portablen Geräts ist zwar bevorzugt, aber keine Notwendigkeit. So kann unter Umständen das Mittel zur kapazitiven Informationsübertragung in einem vom Mittel zur berührungslosen Informationsübertragung getrennten Element angeordnet sein. Es muss dann in geeigneter Weise - bspw. durch entsprechende Instruktionen und durch Bezeichnungen der Elemente - sichergestellt werden, dass der Benutzer immer die zueinander gehörenden Elemente mit sich trägt.

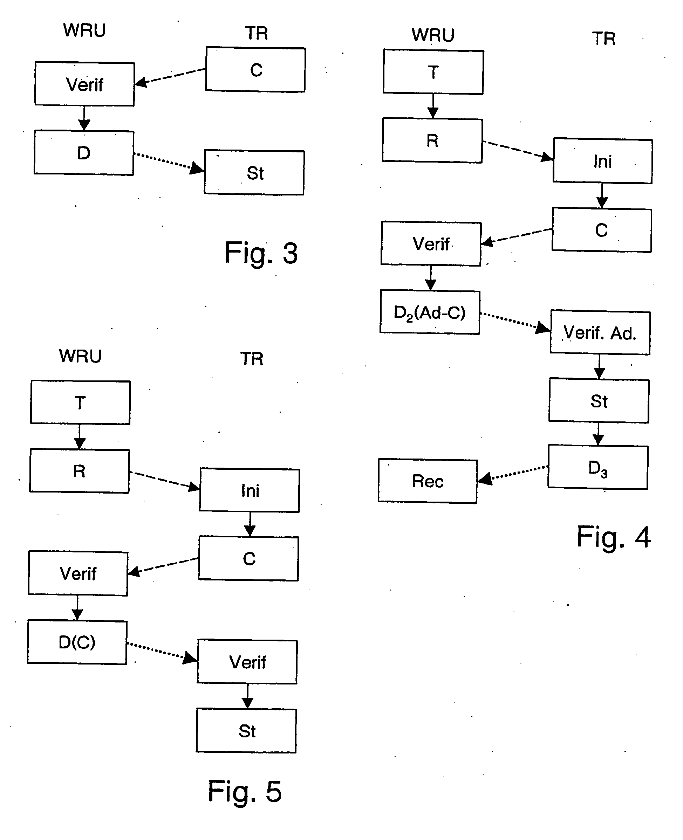

In den Figuren 3 bis 7 bezeichnet WRU die Schreib- und/oder Lesestation und TR ein portables Gerät, welches von einem Benutzer getragen wird. Für die Datenübertragung über den menschlichen Körper werden in der Darstellung gestrichelte Linien verwendet, für die 'berührungslose" (RF, Mikrowelle, induktiv etc.) Datenübertragung gepunktete Linien.

Gemäss **Figur 3** wird bei einer Kopplung zwischen einer dafür vorgesehenen Kuppelfläche und dem Benutzer vom portablen Gerät via den Körper des Benutzers ein Identifikationscode *C* an die Schreib- und/oder Lesestation übermittelt. Dieses ist beispielsweise eine eindeutige Identifikationsnummer des portablen Geräts und erlaubt der Schreib- und/oder Lesestation die Identifikation des portablen Geräts. Im Anschluss an die Übermittlung wird anhand des Identifikationssignals durch die Schreib- und/oder Lesestation verifiziert (Verif), ob das portable Gerät (bzw. dessen Träger) zum gewünschten Vorgang berechtigt. Falls dies nicht der Fall ist, wird das Verfahren abgebrochen. Ist hingegen das portable Gerät berechtigt, können Schreib- und/oder Leseprozesse (im Rahmen der zweiten Informationsübertragung) wischen der Schreib- und/oder Lesestation und dem portablen Gerät stattfinden. Im gezeichneten Beispiel bestehen diese aus einem einzigen Schreibprozess auf dem portablen Gerät, auf welchem Daten $D$ abgespeichert werden ($St$). Ergänzend zu den Schreib- und/oder Leseprozessen oder anschliessend an diese können ggf. weitere Ereignisse ausgelöst werden, beispielsweise eine Freigabe.

Je nach Anwendung kann auch gefordert sein, dass vor den Schreib- und/oder Leseprozessen ein Identifikationscode $C$ von der Schreib- und/oder Lesestation an das portable Gerät zu übermitteln ist oder dass eine Identifikation beidseitig durch zwei Identifikationscodes $C_1$, $C_2$ erfolgt.

Die vom Benutzer zu berührende Fläche kann eine als solche gekennzeichnete, bspw. durch einen farblich hervorgehobenen Rahmen markierte Metallfläche sein. Alternativ dazu kann sie auch Teil der Oberfläche eines Objektes sein, welches vom Benutzer im Rahmen der vorgenommen Aktion ohnehin berührt wird, bspw. einer Türfalle, eines Türknaufs oder eines wirkungsähnlichen Mittels, einer Tastatur oder eines Touch-Screens etc..

In obiger Ausführungsform muss noch sichergestellt werden, dass das System im Moment der Berührung durch den Benutzer tatsächlich aktiv ist. Beispielsweise kann das portable Gerät oder die Schreib- und/oder Lesestation so eingerichtet sein, dass es/sie ständig und periodisch ein Identifikationssignal aussendet. Der entsprechende Empfänger, d.h. die Schreib- und/oder Lesestation bzw. das portable Gerät kann ebenfalls dauernd aktiv und auf Empfang sein, oder das Identifikationssignal dient auch als Aufwecksignal für den Empfänger. Natürlich sind auch andere Ausführungsformen für das Aufwecken der portablen Geräte und/oder Schreib- und/oder Lesestation-Elektronik denkbar, beispielsweise das ständige und periodische Aussenden schwacher Aufwecksignale. Besonders bevorzugt ist aber die Ausführungsform, in welcher die Schreib- und/oder Lesestation durch einen Berührungssensor aufgeweckt wird. Ein solcher beruht bspw. darauf, dass ein menschlicher Körper als Antenne wirkt, welche eine Vielzahl von Störungen im elektromagnetischen Feld der Umgebung einfängt. Bei einer kapazitiven Kopplung zwischen der Fläche - diese wirkt als Elektrode — und dem Benutzer (bspw. bei einer Berührung der Fläche oder ihrer Abdeckung durch den Benutzer) steigen die Störsignale auf dieser im Vergleich zum berührungslosen Zustand massiv an. Diese Störsignale können, als Auslöser benutzt werden, durch welchen die Elektronik der Schreib- und/oder Lesestation von einem Standby-Modus in einen Betriebsmodus versetzt wird.

Die aktivierte Schreib- und/oder Lesestation kann wenn nötig durch ein entsprechendes Signal R die Elektronik des portablen Geräts 'aufwecken'. Zumindest in Fällen von kurzreichweitigen Systemen mit batterielosen portablen Geräten ist ein explizites Aufwecksignal aber nicht unbedingt notwendig. Vielmehr reicht in solchen System unter Umständen, dass die aktivierte Schreib- und/oder Lesestation ein Erregersignal auszusenden beginnt. Das portable Gerät kann so ausgelegt und programmiert sein, dass es beim Empfang eines Erregersignals immer in einem Aktivzustand ist.

Die vorstehend beschriebenen Möglichkeiten für 'Aufweck'-Verfahren sowie weitere an sich bekannte Methoden können sowohl in der Ausführungsform, gemäss **Figur 3** also auch in allen anderen Ausführungsformen der Erfindung angewandt werden. In den folgenden Beispielen wird der Einfachheit halber immer davon ausgegangen, dass die Schreib- und/der Lesestation durch Detektion T des erhöhten Störsignals bei einer Kopplung mit dem Benutzer aufgeweckt wird und anschliessend ein Aufwecksignal an das portable Gerät sendet.

Eine erste Ausführungsform, die dieses Prinzip einer Aufweck- ("wake-up")-Einrichtung implementiert hat, ist in der **Figur 4** gezeichnet. Nachdem von der Schreib- und/oder Lesestation eine Berührung (bzw. fast-Berührung) festgestellt wurde ($T$), sendet diese via den Körper des Benutzers ein Aufwachsignal $R$ an das portable Gerät. Anschliessend daran beginnt die Übermittlung der ersten und zweiten Informationen. Im Beispiel gemäss Figur 4 beinhaltet diese Übermittlung das Übersenden eines Identifikationscodes $C$ wie in Figur 3 und die anschliessende Prüfung der Berechtigung (Verif.) Im Unterschied zur Ausführungsform gemäss Figur 3 erfolgt aber die Übermittlung der Daten $D_2$ von der Schreib- und/oder Lesestation an das portable Gerät adressiert an den Absender des Identifikationscodes $C$. Die Adresse kann aus dem Identifikationscode selbst bestehen oder von der Schreib- und/oder Lesestation anhand des Identifikationscodes ausgewählt sein. Die adressierten Daten sind in der Figur mit $D_2(Ad-C)$ bezeichnet. Diese Adressierung ermöglicht eine zusätzliche Sicherheit: der Empfänger (das portable Gerät) kann verifizieren (Verif.), ob die übermittelten Daten $D_2$ tatsächlich für ihn bestimmt sind. Ist das nicht der Fall, wird das Verfahren abgebrochen. Durch diese zweite Überprüfung kann ausgeschlossen werden, dass ein sich zufällig in der Nähe befindendes portables Gerät versehentlich beschrieben wird. Beispielsweise kann bei Ticketing-Anwendungen vermieden werden, dass eine Zugangskarte versehentlich entwertet wird. Die Ausführungsform der Figur 4 beinhaltet zusätzlich eine weitere Informationsübertragung vom portablen Gerät an die Schreib- und/oder Lesestation (Daten $D_3$). Diese kann bspw. eine Bestätigung an die Schreib- und/oder Lesestation beinhalten, wonach der Speicherungsvorgang erfolgreich abgeschlossen ist, und deren Verbuchung ($Rec$) kann eine notwendige Bedingung für das Auslösen eines Ereignisses (Bspw. Freigabe eines Zugangs) sein. Alternativ dazu oder ergänzend können weitere Daten vom portablen Gerät abgerufen werden.

Sie Ausführungsform von Figur 4 gewährleistet im Vergleich zu derjenigen von Figur 3 eine erhöhte Verlässlichkeit auch in Fällen, in welchen nicht durch die geometrische Anordnung sichergestellt ist, die Übermittlung der ersten Information zwischen den gleichen Teilnehmern stattfindet wie die Übermittlung der zweiten Information. Sie ist aber je nach Umständen nicht manipulationssicher.

**Figur 5** zeigt ein System, welches im Vergleich zu demjenigen der Figuren 3 und 4 ein zusätzliches Sicherheitselement aufweist, durch welches insbesondere sichergestellt wird, dass keine unberechtigte Schreib- und/oder Lesestation Daten auf das portable Gerät schreibt. Diese zusätzliche Sicherheit ist bspw. wichtig, das portable Gerät als Wertkarte dient und Beträge aufgeladen oder abgebucht werden sollen.

Wie in der Ausführungsform gemäss Figur 4 wird anschliessend an das Feststellen einer kapazitiven Kopplung des Benutzers an eine Kupplungsfläche ein Aufwecksignal $R$ versandt, worauf vom portablen Gerät an die Schreib- und/oder Lesestation via den Körper ein Identifikationscode $C$ übermittelt wird, welcher anschliessend verifiziert werden kann. Im Unterschied zum Verfahren gemäss Figur 4 werden die anschliessend auf das portable Gerät (bzw. dessen Datenspeicher) geschriebenen Informationen so aufbereitet, dass die Daten $D$ eine Funktion des Identifikationscodes $C$ und nur bei Kenntnis desselben lesbar sind. Bspw. kann der Identifikationscode oder eine davon abhängige Grösse als Schlüssel bei der Verschlüsselung der Daten dienen. Die Verschlüsselungsfunktiori ist im Voraus festgelegt worden und nur den autorisierten Schreib- und/oder Lesestationen und portablen Geräten bekannt. Die Sicherheit kann zusätzlich erhöht werden, wenn der Identifikationscode $C$ und/oder die Verschlüsselungsfunktion nicht konstant, bspw. zeitäbhängig sind.

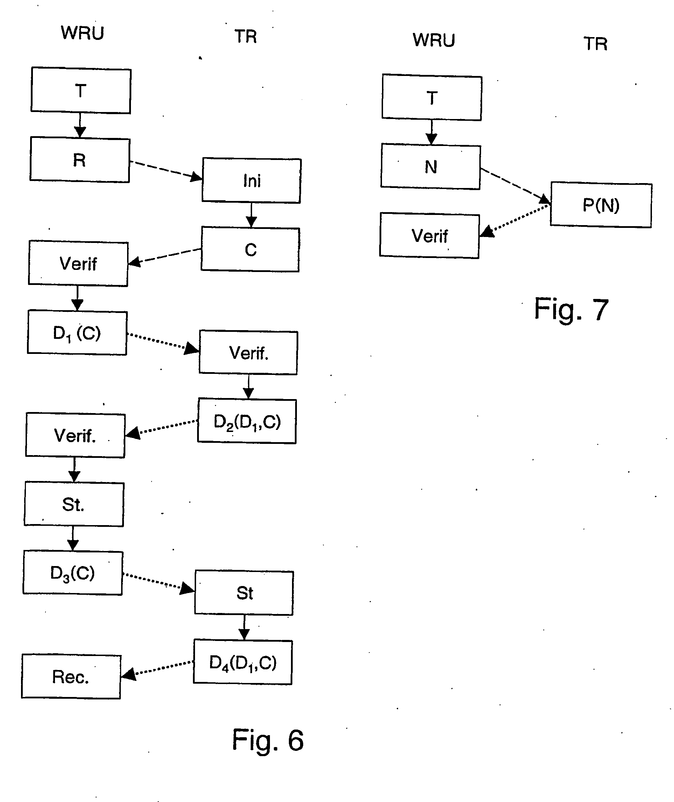

Dieses Prinzip der zusätzlichen Sicherheit durch Verschlüsselung kapazitiv übermitteltem Schlüssel kann weiter ausgebaut werden. **Figur 6** zeigt ein Verfahren, bei welchem ein erstes, nach dem Vorgehen gemäss Figur 5 an das portable Gerät übermitteltes Datenpaket $D_1(C)$ einen Schlüssel enthält. Dieser dient zum Verschlüsseln der folgenden vom portablen Gerät an die Schreib- und/oder Lesestation übermittelten Datenpakete $D_2, D_4$. Für die Datenübertragung in die andere Richtung, d.h. von der Schreib- und/oder Lesestation an das portable Gerät kann der Identifikationscode $C$, der in $D_1$ enthaltene Schlüssel oder ein anderer übermittelter oder im Voraus festgelegter Schlüssel verwendet werden. Vorzugsweise ist wie in Figur 6 dargestellt jedes berührungslos übertragene Datenpaket in irgendeiner Weise direkt oder indirekt von kapazitiv übermittelten Daten (in der Figur vom Identifikationscode $C$) abhängig. Dadurch wird sichergestellt, dass der gesamte Datenaustausch zwischen den anfänglichen Teilnehmern stattfindet, auch wenn sich bspw. mehrere portable Geräte in der Nähe einer Schreib- und/oder Lesestation befinden. Eine Abhängigkeit von kapazitiv übermittelten Daten kann auch technische Merkmale der Übertragung betreffen, bspw. die Wahl einer Trägerfrequenz, einer Referenz für die "Spread Spectrum"-Signalübertragung etc.

In Figur 6 - ebenso in den übrigen Figuren - bezeichnet "Verif." eine Verifikation, bspw. in Form eines Abgleichs, "St" einen Schreibprozess, "Rec" eine Verbuchung eines abgeschlossenen Vorgangs.

Wie in der Ausführungsform gemäss Figur 4 kann nach dem abgeschlossenen Speicherungsprozess noch eine Bestätigung an die Schreib- und/oder Lesestation erfolgen, auch diese unter Umständen verschlüsselt.

Das erfindungsgemässe Vorgehen erlaubt die Verwendung von praktisch jeglichen an sich bekannten oder noch zu entwickelnden Authentisierungs-/Authentifizierungs- oder Verschlüsselungsverfahren oder anderer - Arten des abgesicherten Informationsaustauschs. In **Figur 7** ist noch das Beispiel der Zugangskontrolle mittels des an sich bekannten Challenge-Response-Verfahrens gezeichnet. Die Schreib- und/oder Lesestation - diese ist bspw. an einen Schliesszylinder gekoppelt - übermittelt kapazitiv ein erstes Datenpaket an das portable Gerät. Das erste Datenpaket besteht bspw. aus einer Zufallszahl $N$ oder enthält eine solche. Das portable Gerät verarbeitet dieses Dätenpaket (Zufallszahl $N$) beispielsweise mittels eines Verschlüsselungsverfahrens und gibt einen verarbeiten Wert $P(N)$ zurück. Die Schreib- und/oder Lesestation weist Mittel auf, die korrekte Verarbeitung $P$ des Datenpakets zu verifizieren.

Im gezeichneten Beispiel erfolgt die Übermittlung der "Challenge" kapazitiv, diejenige der "Response" berührungslos, d.h. induktiv oder über elektromagnetische Wellen. Je nach Anwendung wird anschliessend an die Authentifizierung des portablen Geräts - unter Umständen auch vorher - bspw. nebst einem Freigabeereignis noch Information ausgetauscht, vorzugsweise berührungslos. In solchen Fällen kann der "Response" kapazitiv übermittelt werden.

Im Folgenden werden ausgesuchte Anwendungen des erfindungsgemässen Verfahrens in seinen verschiedenen Ausprägungen diskutiert. Gleichzeitig werden das bevorzugte Vorgehen zum Implementieren dieser Anwendungen und die Vorteile dieses Vorgehens erläutert. Die Erfindung ist aber keineswegs auf die nachfolgend aufgeführten ausgesuchten Anwendungen beschränkt.

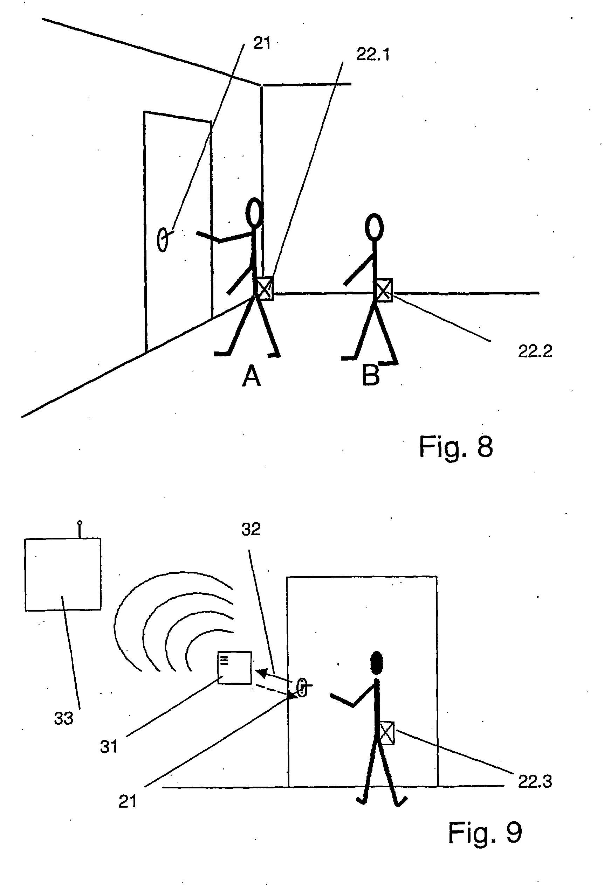

In **Figur 8** ist die Anwendung "Zugangskontrolle" für den einfachsten Fall illustriert: Zwei Personen A, B tragen je ein portables Gerät 22.1, 22.2 als Badge auf sich. Person A berührt den Türdrücker 21, welcher eine mindestens teilweise metallische Oberfläche aufweist und als Elektrode fungiert. Dadurch wird Person A ausgewählt und ein Identifikationscode des portablen Geräts 22.1 wird kapazitiv an die Schreib- und/oder Lesestation übermittelt, an welche die Elektrode gekoppelt ist und welche in der Figur nicht dargestellt ist. Wenn der Identifikationscode den gesetzten Kriterien entspricht (d.h. der Träger des Badges ist zugangsberechtigt), wird das Absenden eines elektromagnetischen Wechselfeldes durch die Schreib- und/oder Lesestation initiiert. Durch dieses werden Daten an das portable Gerät übermittelt. Durch das Wechselfeld kann auch die Energieversorgung der RFID- (oder UHF-, IRetc.) -Komponente des portablen Geräts erfolgen. Die übermittelten Daten enthalten direkt oder indirekt den Identifikationscode. Das portable Gerät führt Schreibprozesse mit empfangenen Daten nur aus, wenn diese den korrekten Identifikationscode enthalten. Auch in die umgekehrte Richtung - also von der Person A an die Schreib- und/oder Lesestation können Daten fliessen. Falls die RFID- (oder UHF-, IR- etc.) -Komponente des portablen Geräts (der Transponder) passiv ist, kann das bspw. durch Lastmodulation auf der Seite des portablen Geräts geschehen. Die wechselseitige Kommunikation kann bspw. eine Überprüfung der Zugangsberechtigung der Person A auf höherer Sicherheitsstufe als der blossen Übermittlung einer Zahl (Code) beinhalten. Zusätzlich kann der Zugang auf dem portablen Gerät protokolliert werden. Indem alle oder mindestens einige der ausgetauschten Datenpakete vom Identifikationscode abhängig sind, wird verhindert, dass die Schreib- und/oder Lesestation versehentlich mit dem portablen Gerät der Person B kommuniziert. Dadurch wird auch effizient verhindert, dass sich bei einer vorliegenden Zugangsberechtigung der Person B eine nicht berechtigte Person A Zutritt verschafft.

Für die Anwendung "Zugangskontrolle" und auch für andere Anwendungen können das Mittel für die Kommunikation via den menschlichen Körper und das Modul für die berührungslose Kommunikation örtlich voneinander getrennt sein, wie das in **Figur 9** illustriert ist. Das Mittel zur Kommunikation via den menschlichen Körper ist bspw. im Schloss integriert, welches auch den Türdrücker 21 aufweist. Zwischen diesem Mittel und dem Modul 31 für die berührungslose Kommunikation existiert eine Kommunikationsverbindung, durch welche mindestens in eine Richtung Daten übertragbar sind, was durch die Pfeile 32 illustriert ist. Der Transponder des portablen Geräts kann wie im vorstehenden Beispiel passiv und dadurch kurzreichweitig sein. In Figur 9 ist noch eine zentrale Kommunikationseinheit 33 gezeichnet, zu welcher das Modul 31 eine Kommunikationsverbindung aufweist. Dieses kann bspw. mit einem Zentralrechner verbunden sein, welcher alle Vorgänge (jede Öffnung der Türe etc.) protokolliert, auf dem portablen Gerät gespeicherte Informationen abruft und/oder durch welchen Updates der auf dem portablen Gerät gespeicherten Informationen vorgenommen werden können. Die zentrale Kommunikationseinheit kann auch mit der Steuerung anderer Objekte verbunden sein und nach einer Freigabe weitere Ereignisse auslösen, wie bspw. das Öffnen eines Garagentors etc.

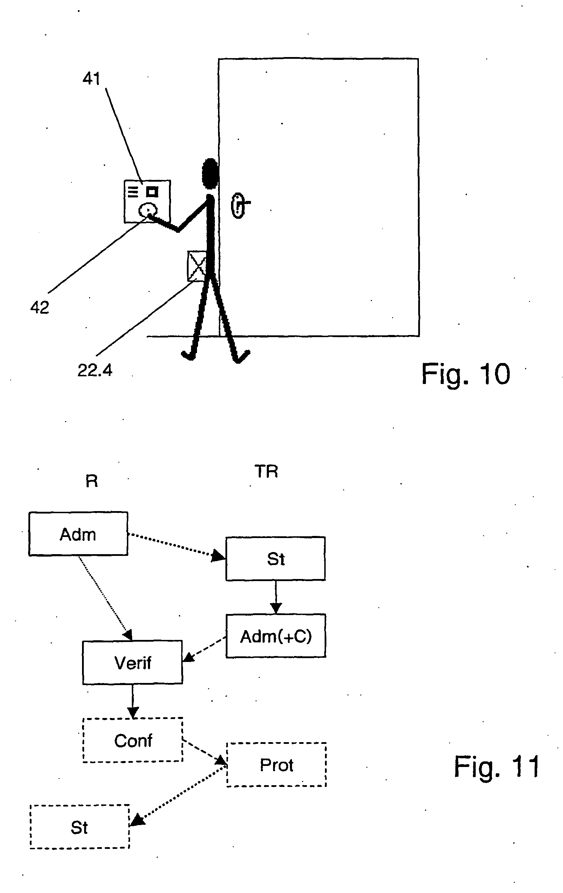

Die Schreib- und/oder Lesestation 41 des Systems gemäss **Figur 10** ist mit einem Sensor 42 versehen, mit welchem ein Fingerabdruck des Benutzers erfasst werden kann. Aus den Messdaten des Sensors kann ein sogenanntes "Templat" - eine datenkomprimierte Darstellung des Fingerabdrucks - ermittelt werden. Die Oberfläche des Sensors dient bspw. gleichzeitig als Elektrode für die kapazitive Datenübertragung. Das portable Gerät 22.4, welcher vom Benutzer getragen wird, besitzt einen Datenspeicher, auf welchem das zu einem früheren Zeitpunkt errechnete Templat des Benutzers gespeichert ist. Wenn sich der Benutzer Zugang verschaffen will, wird ein Datenaustausch wie in den vorstehenden Beispiel in Gang gesetzt, welcher mit der Übertragung eines Identifikationscodes vom portablen Gerät 22.4 an die Schreib- und/oder Lesestation via den menschlichen Körper des Benutzers beginnt. Im Unterschied zu den vorstehend genannten Beispielen beinhaltet die Übertragung der zweiten Information aber die Übermittlung des abgespeicherten Templats vom portablen Gerät an die Schreib- und/oder Lesestation. Dort wird das durch den Sensor ermittelte Templat mit diesem abgespeicherten Templat verglichen. Nur bei Stimmigkeit erfolgt eine Freigabe. Diese Anwendung beinhaltet also nebst der Verifikation, dass der Datenaustausch mit dem ‚richtigen' portablen Gerät erfolgt auch die Absicherung, dass das portable Gerät von der autorisierten Person getragen wird.

Das Ausführungsbeispiel der **Figur 11** ist speziell dafür geeignet, zentral die Zugangsberechtigung zu Objekten zu regeln. Es ist auch dann einsetzbar, wenn die Objekte mit nicht über in einer ständigen Kommunikationsverbindung mit einer zentralen Stelle stehen. In einem ersten Schritt wird über den zweiten Kommunikationskanal ein Zugangscode (Adm) an das portable Gerät übermittelt. Besonders bevorzugt geschieht das, indem das portable Gerät an ein Telekommunikationsmittel - bspw. ein Festnetztelefonmodul oder ein GSM- oder UMTS-Endgerät - gekoppelt oder mit einem entsprechenden Modul versehen wird. Der Zugangscode wird über das Telekommunikationsnetz an das portable Gerät gesandt. Dies kann zu irgendeinem Zeitpunkt geschehen, und der Benutzer muss sich dabei nicht in der Nähe der Schreib- und oder Lesestation befinden. Der Zugangscode wird vom portablen Gerät gespeichert (St).

Der Zugangscode kann zum zeitlich unbeschränkten oder beschränkten, einmaligen, mehrmaligen oder unbeschränkten Zugang zu einem Objekt berechtigen. Er kann vom portablen Gerät abhängig sein und nur durch dieses verwertbar sein, indem dieses bspw. den Zugangscode in einer von einem gerätespezifischen Identifikationscode C abhängige Art weitergibt.

Die Überprüfung der Zugangsberechtigung erfolgt durch Datenübertragung vom portablen Gerät an die Schreib- und/oder Lesestation auf dem ersten Kommunikationskanal, d.h. kapazitiv.

Diese Ausführungsform kann bspw. dazu verwendet werden, direkt über das Telefon, bspw. Mobiltelefon, ein Hotelzimmer zu buchen. Von einer zentralen Einheit wird dem persönlichen portablen Gerät ein Zugangscode übermittelt, welcher zu einem Zugang zu einem Hotelzimmer während einer bestimmten Zeit berechtigt. Die Schliessvorrichtungen der Hotelzimmer können in einer ständigen Kommunikationsverbindung mit der zentralen Einheit stehen, wodurch die zentrale Einheit die Zugangsberechtigungen unmittelbar verwaltet und ggf. auch Zugänge und Unregelmässigkeiten protokollieren kann. In diesem Fall ist die Schreib- und oder Lesestation aus einem Modul der Schliessvorrichtung sowie der zentrale Einheit zusammengesetzt. Als Alternative kann auch auf ein ständige Kommunikationsverbindung zwischen der zentralen Einheit und den Schliessvorrichtungen verzichtet werden. Dann befindet sich die Schreib- und/oder Lesestation (nur) in der Schliessvorrichtung. Die (unter Umständen indirekte) Kommunikation zwischen der Schliessvorrichtung und der zentralen Einheit erfolgt "offline", bspw. indem in die Schreib und/oder Lesestation eine Anzahl von zum Zugang berechtigenden Codes einprogrammiert wird, welche auch der zentralen Einheit bekannt ist. Diese "offline"-Kommunikation ist in der Figur durch den fein gepunkteten Pfeil angedeutet.

Ein zweites Anwendungsbeispiel dieser Ausführungsform ist der Handel mit Immobilien. In einigen Ländern ist es üblich, Kaufinteressenten für eine bestimmte Zeit einen Zugang zu einem Objekt zu verschaffen. Dies geschieht gegenwärtig oft, indem dem Interessenten ein Code mitgeteilt wird, den dieser dann am Ort des Objekts über ein Tastaturfeld eingeben muss. Die Erfindung ermöglicht, dass ein Zugangscode direkt an das portable Gerät übermittelt wird und der Interessent nur das portable Gerät auf sich tragen muss, um Zugang zum Objekt zu erhalten.

Optional kann noch vorgesehen sein, dass ein Protokoll des Zugangs - ggf. verbunden mit einer Abbuchungsbestätigung, einer Entwertung etc. - an die zentrale Einheit übermittelt wird. Dies kann wie in der Figur dargestellt über den zweiten Kommunikationskanal - also bspw. über eine Telekommunikationsverbindung - geschehen, nachdem von der Schreib-und/oder Lesestation eine Bestätigung an das portable Gerät bestätigt wurde.

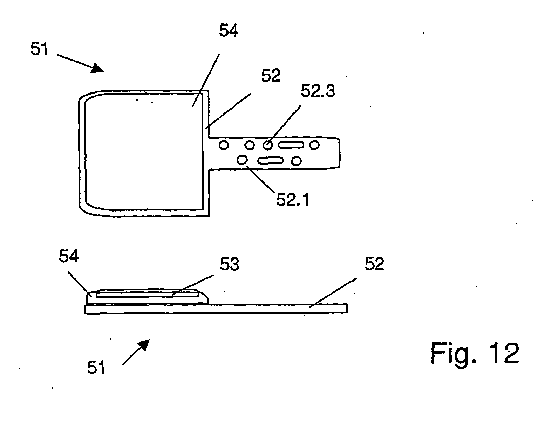

**Figur 12** zeigt eine weitere spezielle Ausführungsform des portablen Geräts 51. Die Figur zeigt das portable Gerät 51 in Draufsicht und in einer Schnittdarstellung. Das portable Gerät 51 ist dabei als Schlüssel ausgebildet. Ein metallisches Schlüssel- . Basisteil 52 an welchem ein Schlüsselschaft 52.1 ausgebildet ist, dient nebst seiner Zylinderöffnungsfunktion gleichzeitig als erste Elektrode. Der Schlüsselschaft kann in an sich bekannter Art Codierungsbohrungen 52.3 aufweisen, welche mit entsprechenden mechanischen Zuhaltungen eines Schliesszylinders zusammenwirken. Auch andere Codierungseinrichtungen können alternativ oder ergänzend dazu am Schlüssel vorhanden sein. Die zweite Elektrode 53 ist im Innern eines Schlüsselgehäuses 54 angeordnet, welcher auch die notwendige Elektronik (nicht gezeichnet) für die Speicherung, den Empfang und/oder das Versenden von Daten aufweist sowie ggf. Antennenelemente etc. aufweist.

Ein solcher, gleichzeitig als portables Gerät dienender Schlüssel hat viele Verwendungsmöglichkeiten. So kann die Zugangsberechtigung in einem Gebäude bspw. so geregelt sein, dass mindestens einige der Türen innerhalb des Gebäudes sowie eventuell auch äussere Zugänge zum Gebäude mindestens tagsüber ohne Schlüssel geöffnet werden können. Dies kann geschehen, indem zwischen einer Schreib- und/oder Leseeinrichtung des Schliesszylinders auf erfindungsgemässe Art Informationen übertragen werden und abhängig davon die Türe freigegeben wird. Der Benutzer kann sich so im Gebäude bewegen und die Räume betreten, zu denen er Zugang hat, ohne den Schlüssel in die Hand nehmen zu müssen. An Türen mit erhöhtem Sicherheitsbedarf kann zumindest des Nachts vorgesehen sein, dass zusätzlich oder ergänzend ein Türschloss mit dem Schlüssel mechanisch und/oder mechatronisch betätigt werden muss.

Natürlich können auch einzelne Objekte nur mittels der kapazitiven Informationsübertragung, andere nur in konventioneller Art zugänglich sein.

Auch kann die Informationsübertragung zwischen dem Schlüssel 51 und einem Schliesszylinder über den zweiten Kommunikationskanal in der Art bereits bekannter induktiv und/oder über elektromagnetische Wellen kommunizierender Sicherheitsmodule stattfinden, wobei - für ausgesuchte Anwendungen - über den ersten Kommunikationskanal übermittelten Informationen als notwendige Voraussetzung für die Übertragung von Informationen über den zweiten Kommunikationskanal dienen können.

Die Ausführungsform des portablen Geräts gemäss Fig. 12 ist auch in Fällen verwendbar, in denen keine Informationsübertragung über einen zweiten Kommunikationskanal stattfindet. Auch diesem Fall besitzt das portable Gerät aber mindestens:

- ein metallisches Schlüssel-Basisteil 52, an welchem ein Schlüsselschaft ausgebildet ist, der in eine entsprechende Öffnung eines Schliesszylinders einführbar ist,

- und eine zweite Elektrode 53,

- wobei das Schlüssel-Basisteil und die zweite Elektrode so von einer Elektronik des portablen Geräts ansteuerbar sind, dass sie als erste und zweite Elektrode für eine kapazitive Informationsübertragung dienen können,

- und wobei der Schlüssel-Elektronik vorzugsweise ein Datenspeicher zugeordnet oder in diese integriert ist.

Viele weitere Ausführungsformen sind denkbar.

Induktion/elektromagnetische Wellen (bevorzugte Medien für den zweiten Informationsübertragungskanal): Auch wenn bei einer gegebenen Distanz zwischen der Schreib- und/oder Lesestation und dem portablen Gerät meist eine Kopplung (induktiv/elektromagnetische Wellen) dominiert, so versteht es sich doch, dass die beiden Informationsübertragungsarten je nach gewählter Trägerfrequenz/Distanz ineinander übergehen. Ausserdem schliesst die Erfindung nicht aus, dass Informationen auf verschiedenen Frequenzen übertragen werden, so dass sowohl hauptsächlich induktive als auch hauptsächlich elektromagnetische Informationsübertragung gleichzeitig oder nacheinander stattfinden kann.

Die Informationsübertragung mittels Induktion und/oder elektromagnetischer Wellen kann der Informationsübertragung auf einem bestehenden Informationsübertragungskanal entsprechen und ggf. dessen Protokolle und/oder Hilfsmittel nutzen. Insbesondere kann die Informationsübertragung über GSM, UMTS oder mit vergleichbaren Mitteln geschehen.

**Patentansprüche**

1. Verfahren zur Zugangskontrolle und/oder Verriegelung mittels der Übertragung von Identifikationssignalen und/oder Informationen, unter Verwendung mindestens einer Schreib- und/oder Lesestation und mindestens eines portablen, von einem Benutzer getragenen Gerätes, welches ein Paar von Elektroden und Steuermittel zum Anlegen einer Wechselspannung für die kapazitive Informationsübertragung zwischen der Schreib- und/oder Lesestation und dem portablen Gerät über einen ersten Kommunikationskanal, sowie eine RFID-Antenne und einen aktiven oder passiven RFID-Transponder und daran gekoppelt eine RFID-Antenne zum Übertragen von Informationen zwischen der Schreib- und/oder Lesestation und dem portablen Gerät über einen zweiten Kommunikationskanal aufweist 'wobei Informationen über den ersten und über den zweiten Kommunikationskanal, übertragen werden, und wobei über den ersten Kommunikationskanal und/oder über den zweiten Kommunikationskanal vom portablen Gerät an die Schreib- und/oder Lesestation übermittelte Daten mit gespeicherten Werten abgeglichen werden, und bei einer gewünschten Übereinstimmung und eventuell nach bei Erfüllung weiterer Bedingungen der Benutzer zum Zugang zu einem Objekte berechtigt wird.

2. Verfahren nach Anspruch 1, **dadurch gekennzeichnet, dass** über den ersten Kommunikationskanal Informationen übertragen werden, welche zur Identifikation und/oder Selektion des Benutzers verwendbar sind.

3. Verfahren nach Anspruch 1 oder 2, **dadurch gekennzeichnet, dass** der Schreib- und/oder Lesestation eine Kupplungsfläche zugeordnet ist und dass eine erste Informationsübertragung über den ersten Kommunikationskanal und eine zweite Informationsübertragung über den zweiten Kommunikationskanal stattfindet, sobald der Benutzer oder das portable Gerät die Kupplungsfläche berührt oder sich höchstens in einem Maximalabstand davon befindet.

4. Verfahren nach einem der vorangehenden Ansprüche, **dadurch gekennzeichnet, dass** eine erste Informationsübertragung über den ersten Kommunikationskanal eine notwendige Voraussetzung für die Übertragung von Informationen über den zweiten Kommunikationskanal ist.

5. Verfahren nach Anspruch 4, **dadurch gekennzeichnet, dass** bei der zweiten Informationsübertragung übertragene Daten von Daten abhängen, die bei der ersten Informationsübertragung übertragen wurden.

6. Verfahren nach Anspruch 5, **dadurch gekennzeichnet, dass** mindestens ein bei der zweiten Informationsübertragung übermitteltes Datenpaket bei der ersten Informationsübertragung übertragene Daten mindestens teilweise enthält.

7. Verfahren nach Anspruch 5 oder 6, **dadurch gekennzeichnet, dass** bei der ersten Informationsübertragung übertragene Daten als Schlüssel zum Verschlüsseln von Daten dienen, welche bei der zweiten Informationsübertragung übermittelt werden.

8. Verfahren nach einem der vorangehenden Anspruche, **dadurch gekennzeichnet dass** bei einer Informanonsübertragung über den ersten Kommunikanonskanal ein Identifkationscode des portablen Geräts vom portablen Gerät an die Schreib- und/oder Lesestation übermittelt wird, und dass vorzugsweise über den ersten Kommunikationkansl nur der Identifikationscode vom portablen Gerät an die Schreib- und/oder Lesestation übermittelt wird.

9. Verfahren nach einem der vorangehenden Ansprüche, **dadurch gekennzeichnet, dass** über den zweiten Kommunikationskanal Daten von der Schreib- und/oder Lesestation an das portable Gerät übermittelt werden, und dass diese vom portablen Gerät abgespeichert werden.

10. Verfahren nach einem der vorangehenden Ansprüche, **dadurch gekennzeichnet, dass** über den zweiten Kommunikationskanal vom portablen Gerät an die Schreib- und/oder Lesestation ein Templat mit biometrischen Daten des Benutzers übermittelt wird.

11. Verfahren nach einem der vorangehenden Ansprüche, **dadurch gekennzeichnet, dass** vor der Übertragung von Information über den zweiten Kommunikationskanal ein unselektiver und/oder unspezifischer Informationsaustausch zur Vorbereitung der Übertragung von Information über den zweiten Kommunikanonskanal startfindet, beispielsweise zur Synchronisierung und zum Aufbau des zweiten Informationskanals.

**12.** Verfahren nach einem der vorangehenden Ansprüche, **dadurch gekennzeichnet, dass** die Schreib- und/oder Lesestation durch eine kapazitive Kopplung des Benutzers an eine Kupplungsfläche der Schreib- und/oder Lesestation aufgeweckt wird.

**13.** Verfahren nach einem der vorangehenden Ansprüche, **dadurch gekennzeichnet, dass** während der Informationsübertragung und/oder vor der Informationsübertragung von der Schreib- und/oder Lesestation an das portable Gerät induktiv Energie übertragen wird und dass diese Energie mindestens teilweise dafür verwendet wird, vom portablen Gerät über den ersten Kommunikationskanal Informationen an die Schreib- und/oder Lesestation zu übertragen.

**14.** Zugangskontroll- und/oder Verriegelungssystem, aufweisend mindestens eine Schreib- und/oder Lesestation und mindestens ein portables Gerät mit einem Datenspeicher, wobei das portable Gerät ein Paar von Elektroden und Steuermittel zum Anlegen einer Wechselspannung für die kapazitive Informationsübertragung zwischen der Schreib- und/oder Lesestation und dem portablen Gerät über einen ersten Kommunikationskanal, sowie eine RFID-Antenne und einen aktiven oder passiven RFID-Transponder und daran gekoppelt eine RFID-Antenne zum Übertragen von Informationen zwischen der Schreib- und/oder Lesestation und dem portablen Gerät über einen zweiten Kommunikationskanal aufweist, und wobei die Schreib- und/oder Lesestation entsprechende erste und zweite Mittel zum Empfangen und/oder Versenden von Information über den ersten bzw. den zweiten Informationsübertragungskanal aufweist, und befähigt ist, über den ersten Kommunikationskanal und/oder über den zweiten Kommunikationskanal vom portablen Gerät empfangene Daten mit gespeicherten Werten abzugleichen, und bei einer gewünschten Übereinstimmung und eventuell nach bei Erfüllung weiterer Bedingungen der Benutzer zum Zugang zu einem Objekt zu berechtigen.

**15.** System nach Anspruch 14, **dadurch gekennzeichnet, dass** das portable Gerät eine karten- oder wertpapierartige Einheit bildet, in welche das Paar von Elektroden, die Steuermittel, die RFID-Antenne, der RFID-Transponder und die RFID-Antenne integriert sind.

**16.** Schreib- und/oder Lesestation für ein System nach Anspruch 14 oder 15, aufweisend einen Datenspeicher und ein Datenverarbeitungselement sowie ein erstes Mittel zum Empfangen und/oder Versenden von Daten von einem bzw. an ein portables Geräte über eine kapazitive Kopplung und ein zweites Mittel zum Empfangen und/oder Versenden von Daten von dem bzw. an das genannte portable Gerät mittels RFID, sowie Mittel, über den ersten Kommunikationskanal und/oder über den zweiten Kommunikationskanal vom portablen Gerät empfangene Daten mit gespeicherten Werten abzugleichen, und bei einer gewünschten Übereinstimmung und eventuell nach bei Erfüllung weiterer Bedingungen der Benutzer zum Zugang zu einem Objekt zu berechtigen.

**17.** Portables Gerät für ein System nach einem der Ansprüche 14 oder 15, aufweisend einen Datenspeicher sowie ein Paar von Elektroden und Steuermittel zum Anlegen einer Wechselspannung für die kapazitive Informationsübertragung zwischen der Schreib- und/oder Lesestation und dem portablen Gerät über einen ersten Kommunikationskanal, sowie eine RFID-Antenne und einen aktiven oder passiven RFID-Transponder und daran gekoppelt eine RFID-Antenne zum Übertragen von Informationen zwischen der Schreib- und/oder Lesestation und dem portablen Gerät über einen zweiten Kommunikationskanal, wobei das Portable Gerät dafür eingerichtet ist, über den ersten Kommunikationskanal und/oder über den zweiten Kommunikationskanal Daten an die Schreib- und/oder Lesestation zu senden, die dort mit gespeicherten Werten abgeglichen werden können, und bei einer gewünschten Übereinstimmung und eventuell nach bei Erfüllung weiterer Bedingungen der Benutzer zum Zugang zu einem Objekt berechtigen.

**Claims**

**1.** A method for the access control and/or locking by means of the transmission of identification signals and/or of information, by way of using at least one write- and/or read installation and at least one portable device carried by the user, the device comprising a pair of electrodes and control means for applying an alternating voltage for the capacitive information transmission between the write- and/or read installation and the portable device via a first communication channel, as well as a RFID-antenna and an active or passive RFID-transponder and, coupled thereto, a RFID-antenna for the transmission of information between the write and/or read installation and the portable device via a second communication channel, wherein information is transmitted via the first communication channel and/or via the second communication channel, and wherein data transmitted from the portable device to the write- and/or read installation via the first communication channel and/or via the second communication channel are compared to stored values, and, in the case of desired congruency and possibly upon fulfilment of further conditions, the user is authorised to access an object.

2. A method according to claim 1, **characterised in that** information which may be used for identification and/or selection of the user, is transmitted via the first communication channel.

3. A method according to claim 1 or 2, **characterised in that** a coupling surface is allocated to the write- and/or read installation, and that a first information transmission takes place via the first communication channel, and a second information transmission takes place via the second communication channel, as soon as the user or the portable device touches the coupling surface or at the most is located at a maximal distance thereto.

4. A method according to any one of the preceding claims, **characterised in that** a first information transmission via the first communication channel is a necessary precondition for the transmission of information via the second communication channel.

5. A method according to claim 4, **characterised in that** data transmitted with the second information transmission depends on data which has been transmitted with the first information transmission.

6. A method according to claim 5, **characterised in that** at least one data package transferred with the second information transmission at least partly contains data transmitted with the first information transmission.

7. A method according to claim 5 or 6, **characterised in that** data transmitted with the first information transmission serves as a key for encoding data which is transmitted with the second information transmission.

8. A method according to any one of the preceding claims, **characterised in that** an identification code of the portable device is communicated from the portable device to the write- and/or read installation with the information transmission via the first communication channel, and that preferably only the identification code is transmitted via the first communication channel from the portable device to the write- and/or read installation.

9. A method according to any one of the preceding claims, **characterised in that** data is transmitted from the write- and/or read installation to the portable device via the second communication channel, and that this data is stored by the portable device.

10. A method according to any one of the preceding claims, **characterised in that** a template with biometric data of the user is transmitted from the portable device to the write- and/or read installation via the second communication channel.

11. A method according to any one of the preceding claims, **characterised in that**, prior to the transmission of information via the second information channel, an unselective and/or unspecific information exchange for preparing the transmission of information via the second information channel takes place, for example for the synchronisation and configuration of the second information channel.

12. A method according to any one of the preceding claims, **characterised in that** the write- and/or read installation is activated by a capacitive coupling of the user with a coupling surface of the write- and/or read installation.

13. A method according to any one of the preceding claims, **characterised in that** energy is transmitted inductively from the write- and/or read installation to the portable device during the information transmission and/or before the information transmission, and that this energy is at least partly used to transmit information from the portable device via the first communication channel to the write- and/or read installation.

14. An access control and/or locking system comprising at least one write- and/or read installation and at least one portable device with a data memory, wherein the portable device comprises a pair of electrodes and control means for applying an alternating voltage for the capacitive information transmission between the write- and/or read installation and the portable device via a first communication channel, as well as a RFID-antenna and an active or passive RFID-transponder and, coupled thereto, a RFID-antenna for the transmission of information between the write-

and/or read installation and the portable device via a second communication channel, and wherein the write- and/or read installation comprises corresponding first and second means for receiving and/or sending information via the first and second communication channel respectively, and is capable of comparing data received from the portable device via the first communication channel and/or via the second communication channel with stored values, and, in the case of desired congruency and possibly upon fulfilment of further conditions, of authorising the user to access an object.

15. A system according to claim 14, **characterised in that** the portable device forms a card-like or voucher-like unit, into which the pair of electrodes, the control means, the RFID-antenna, the RFID-transponder and the coupled RFID-antenna are integrated.

16. A write- and/or read installation for a system according to claim 14 or 15, comprising a data memory and a data processing unit as well as a first means for receiving and/or sending data from or to a portable device via a capacitive coupling, and a second means for receiving and/or sending data from or to the portable device by way of RFID, as well as means for comparing data received from the portable device via the first communication channel and/or via the second communication channel with stored values, and, in the case of desired congruency and possibly upon fulfilment of further conditions, for authorising the user to access an object.

17. A portable device for a system according to any one of claims 14 or 15, comprising a data memory as well as a pair of electrodes and control means for applying an alternating voltage for the capacitive information transmission between the write- and/or read installation and the portable device via a first communication channel, as well as a RFID-antenna and an active or passive RFID-transponder and, coupled thereto, a RFID-antenna for the transmission of information between the write- and/or read installation and the portable device via a second communication channel, wherein the portable device is equipped to send data via the first communication channel and/or via the second communication channel to the write- and/or read installation, where said data can be compared to stored values, and, in the case of desired congruency and possibly upon fulfilment of further conditions, to authorise the user to access an object.

**Revendications**

1. Procédé pour le contrôle des accès et/ou pour le verrouillage au moyen de la transmission de signaux d'identification et/ou d'informations, sous l'utilisation d'au moins une station d'écriture et/ou de lecture et d'au moins un appareil portable porté par un utilisateur, lequel présente une paire d'électrodes et des moyens de commande pour appliquer une tension alternative pour la transmission capacitive des informations entre la station d'écriture et/ou de lecture et l'appareil portable via un premier canal de communication, ainsi qu'une antenne RFID et un transpondeur RFID actif ou passif et une antenne RFID qui y est accouplée, pour la transmission des informations entre la station d'écriture et/ou de lecture et l'appareil portable et via un second canal de communication, et des informations sont transmises via le premier et via le second canal de communication, et des données transmises via le premier canal de communication et/ou par le second canal de communication de l'appareil portable à la station d'écriture et/ou de lecture sont comparées à des valeurs mémorisées et, lors d'une concordance souhaitée et éventuellement si d'autres conditions sont remplies, l'utilisateur est autorisé à accéder à un objet.

2. Procédé selon la revendication 1, **caractérisé en ce que** des informations sont transmises via le premier canal de communication et qui peuvent être utilisées pour l'identification et/ou pour la sélection d'un utilisateur.

3. Procédé selon l'une ou l'autre des revendications 1 et 2, **caractérisé en ce que** la station d'écriture et/ou de lecture est attribuée à une surface d'accouplement et **en ce qu'**une première transmission d'informations a lieu par le premier canal de communication et **en ce qu'**une seconde transmission d'informations a lieu par le second canal de communication dès que l'utilisateur ou l'appareil portable effleure la surface d'accouplement ou se trouve au plus à une distance maximale de celle-ci.

4. Procédé selon l'une des revendications précédentes, **caractérisé en ce qu'**une première transmission d'informations par le premier canal de communication est une condition nécessaire pour la transmission d'informations par le second canal de communication.

5. Procédé selon la revendication 4, **caractérisé en ce que**, lors de la seconde transmission d'informations, les données transmises dépendent de données qui ont été transmises lors de la première transmission d'informations.

**6.** Procédé selon la revendication 5, **caractérisé en ce qu'**au moins un paquet de données transmis lors de la seconde transmission d'informations contient au moins en partie des données transmises lors de la première transmission d'informations.

**7.** Procédé selon l'une ou l'autre des revendications 5 et 6, **caractérisé en ce que** les données transmises lors de la première transmission d'informations servent de clé pour le décodage des données qui sont transmises lors de la seconde transmission d'informations.

**8.** Procédé selon l'une des revendications précédentes, **caractérisé en ce que**, lors d'une transmission d'informations par le premier canal de communication, un code d'identification de l'appareil portable est transmis par l'appareil portable à la station d'écriture et/ou de lecture et **en ce que**, de préférence, seul le code d'identification est transmis par l'appareil portable à la station d'écriture et/ou de lecture.

**9.** Procédé selon l'une des revendications précédentes, **caractérisé en ce que**, des données sont transmises par la station d'écriture et/ou de lecture à l'appareil portable par le second canal de communication et **en ce que** ces données sont mémorisées par l'appareil portable.

**10.** Procédé selon l'une des revendications précédentes, **caractérisé en ce qu'**un modèle qui contient des données biométriques de l'utilisateur est transmis par l'appareil portable à la station d'écriture et/ou de lecture par le second canal de communication.

**11.** Procédé selon l'une des revendications précédentes, **caractérisé en ce que**, avant la transmission des informations par le second canal de communication, un échange d'informations non sélectif et/ou non spécifique a lieu pour la préparation de la transmission des informations par le second canal de communication, par exemple pour la synchronisation et pour la mise en oeuvre du second canal de communication.

**12.** Procédé selon l'une des revendications précédentes, **caractérisé en ce que** la station d'écriture et/ou de lecture est activée par un couplage capacitif de l'utilisateur à une surface d'accouplement de la station d'écriture et/ou de lecture.

**13.** Procédé selon l'une des revendications précédentes, **caractérisé en ce que**, pendant la transmission des informations et/ou avant la transmission des informations par la station d'écriture et/ou de lecture à l'appareil portable, une énergie inductive est transmise et **en ce que** cette énergie est utilisée au moins en partie par l'appareil portable pour transmettre des informations à la station d'écriture et/ou de lecture par le premier canal de communication.

**14.** Système de contrôle des accès et/ou de verrouillage, présentant au moins une station d'écriture et/ou de lecture et au moins un appareil portable avec une mémoire de données, l'appareil portable présente une paire d'électrodes et des moyens de commande pour appliquer une tension alternative pour la transmission capacitive des informations entre la station d'écriture et/ou de lecture et l'appareil portable par un premier canal de communication, ainsi qu'une antenne RFID et un transpondeur RFID actif ou passif et une antenne RFID qui y est accouplée, pour la transmission des informations entre la station d'écriture et/ou de lecture et l'appareil portable par un second canal de communication, et la station d'écriture et/ou de lecture présente des premiers moyens correspondants et des seconds moyens correspondants pour la réception et/ou l'envoi des informations par le premier ou par le second canal de transmission des informations et est capable de comparer des données reçues, via le premier canal de communication et/ou le second canal de communication, par l'appareil portable à des valeurs mémorisées et, lors d'une concordance souhaitée et éventuellement si d'autres conditions sont remplies, d'autoriser l'utilisateur à accéder à un objet.

**15.** Système selon la revendication 14, **caractérisé en ce que** l'appareil portable forme une unité semblable à une carte ou à des papiers de valeur dans laquelle la paire d'électrodes, les moyens de commande, l'antenne RFID, le transpondeur RFID et les antennes RFID sont intégrés.

**16.** Station d'écriture et/ou de lecture pour un système selon l'une ou l'autre des revendications 14 et 15, présentant une mémoire de données et un élément de traitement des données ainsi qu'un premier moyen pour la réception et/ou l'envoi de données depuis un ou vers un appareil portable par l'intermédiaire d'un couplage capacitif et un second moyen pour la réception et/ou l'envoi de données depuis le ou vers l'appareil portable mentionné au moyen de la technique RFID, ainsi que des moyens pour comparer les données reçues par l'appareil portable à des valeurs mémorisées par l'intermédiaire du premier canal de communication et/ou du second canal de communication et d'autoriser l'utilisateur à accéder à un objet lors d'une concordance souhaitée et éventuellement si d'autres conditions sont remplies.

**17.** Appareil portable pour un système selon l'une ou l'autre des revendications 14 et 15, présentant une mémoire de données et une paire d'électrodes et des moyens de commande pour appliquer une tension alternative pour la transmission capacitive des informations entre la station d'écriture et/ou de lecture et l'appareil portable par un premier canal de communication, ainsi qu'une antenne RFID et un transpondeur RFID actif ou passif et une antenne RFID qui y est accouplée pour, la transmission des informations entre la station d'écriture et/ou de lecture et l'appareil portable par un second canal de communication, et l'appareil portable est équipé pour envoyer à la station d'écriture et/ou de lecture via le premier canal de communication et/ou via le second canal de communication des données qui peuvent y être comparées aux valeurs mémorisées et qui, lors d'une concordance souhaitée et éventuellement si d'autres conditions sont remplies, autorisent l'utilisateur à accéder à un objet.

1

3

2

4

Fig. 1

11

Fig. 2

WRU · TR

Verif ◄- - - C

D ·····► St

# Fig. 3

WRU · TR

T

R - - -► Ini

Verif ◄- - - C

D₂(Ad-C) ·····► Verif. Ad.

St

Rec ◄····· D₃

# Fig. 4

WRU TR

T

R - - -► Ini

Verif ◄- - - C

D(C) ·····► Verif

St

# Fig. 5

Fig. 6

Fig. 7

21
22.1

22.2

A        B

Fig. 8

32

33

31

21

22.3

Fig. 9

41

42

22.4

Fig. 10

R               TR

| Adm |

| St |

| Adm(+C) |

| Verif |

| Conf |

| Prot |

| St |

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4591854 A
- US 5914701 A
- US 5796827 A
- EP 1024626 A